# EUROPÄISCHE PATENTSCHRIFT

(11) **EP 2 213 405 B1**
(45) Veröffentlichungstag und Bekanntmachung des Hinweises auf die Patenterteilung: **30.03.2011**
(21) Anmeldenummer: 09001385.5
(22) Anmeldetag: 02.02.2009
(51) Int. Cl.: B23P 11/00, B29C 65/56, G01D 11/24, F16B 17/00

(54) **Metall-Kunststoff-Verbindung**
Plastic-metal compound
Liaison de plastique et de métal

(43) Veröffentlichungstag der Anmeldung: 04.08.2010
(73) Patentinhaber: Pepperl + Fuchs GmbH, 68307 Mannheim (DE)
(72) Erfinder: Langer, Christian, 12623 Berlin (DE); Täubert, Sebastian, 12589 Berlin (DE); Geipel, Jörg, 10249 Berlin (DE)
(74) Vertreter: Müller, Wolf-Christian

(56) Entgegenhaltungen:
- EP-A- 0 551 717
- EP-A- 0 863 697
- DE-A1-102006 024 767
- GB-A- 1 080 595
- JP-A- 62 251 123
- US-A- 3 594 027
- US-A1- 2006 005 643

## Beschreibung

Die Erfindung betrifft ein Verfahren zur Herstellung einer Verbindung gemäß dem Oberbegriff des Patentanspruchs 1 und ein Metall - Kunststoff Verbund gemäß dem Oberbegriff des Patentanspruchs 8.

Das Herstellen von zuverlässigen Verbindungen zwischen Metallen und Kunststoffen ist in der Technik ein wichtiger Bestandteil, insbesondere in Bereichen in denen eine optische Kontrolle von Fertigungsprozessen notwendig ist. Im Bereich der Lebensmitteltechnik werden an derartige Verbindungen oftmals erhöhte Anforderungen an die physikalischen und chemischen Eigenschaften gestellt, insbesondere muss ein derartiger Verbund hohe Anforderungen hinsichtlich der Zuverlässigkeit und der Dichtheit erfüllen, sowie die entsprechenden Normen einhalten. Weiterhin unterliegen derartige Verbindungen auch stark wechselnden Temperaturen im Bereich von -40 bis 120 C und stark schwankenden Drücken im Bereich von mehreren Bar. Um die hohen Anforderungen erfüllen zu können, werden bei herkömmlichen Metall - Kunststoffverbindungen die Verbindungsstellen zwischen den Metallflächen und den Kunststoffflächen mittels mechanischen Befestigungsmitteln, wie Schrauben und Klammern, und oder chemischen Dichtungsmitteln zumeist in Form von Klebemitteln geschützt. Nachteilig ist jedoch, dass die zwischen den Dichtflächen eingebrachten Klebemittel an den aneinanderliegenden Seitenflächen der Metallflächen bzw. Kunststoffseitenflächen teilweise unerwünschte Inhaltsstoffe enthalten, diese eventuell abgeben und oftmals nicht ausreichend alterungsbeständig sind. Weiterhin sind mechanische Befestigungsmittel aufwändig in der Herstellung und verursachen vielfältige hygienische Nachteile, insbesondere bei der Reinigung.

Des Weiteren ist es wünschenswert, insbesondere auf der Oberfläche an der Schnittstelle zwischen den beiden Materialien einen möglichst ebenen, fugenfreien Übergang auszubilden, um ein Einlagern von Stoffen zu unterdrücken. Im Allgemeinen sind hierzu aufwändige mechanische Nachbearbeitungsschritte nach dem Zusammenfügen der beiden Materialien notwendig, um die erforderliche Oberflächenbeschaffenheit zu gewährleisten.

Aus der EP 0551 717 A1, die dem nächstliegenden Stand der Technik entspricht, ist eine Verbindung zwischen einer Metallfläche und einer Kunststofffläche bekannt. Hierbei weist die Metallfläche und die Kunststofffläche jeweils eine schulterförmige Seitenfläche mit einer darin eingeschlossenen ringförmigen Dichtung auf. Des Weiteren ist aus der DE 10 2006 024 767 A1 ein Verfahren und eine Vorrichtung zum Verbinden eines Kunststoffdeckels mit einem Metallgehäuse bekannt.

Vor diesem Hintergrund besteht die Aufgabe der Erfindung darin, ein Verfahren zur Herstellung einer Verbindung zwischen einer Metallfläche und einer Kunststofffläche sowie einen Metall - Kunststoff Verbund anzugeben, die jeweils die Nachteile des Standes der Technik verringern.

Die Aufgabe wird durch ein Verfahren zur Herstellung einer Verbindung zwischen einer Metallfläche und einer Kunststofffläche mit den Merkmalen des Patentanspruchs 1 bzw. mit einem Metall - Kunststoff Verbund mit den Merkmalen des Patentanspruchs 8 gelöst. Vorteilhafte Ausgestaltungen der Erfindung sind Gegenstand von Unteransprüchen.

Gemäß dem Gegenstand der Erfindung nach Anspruch 1 wird ein Verfahren zur Herstellung einer Verbindung zwischen einer Metallfläche und einer Kunststofffläche bereitgestellt, bei der an der Metallfläche an wenigstens einem Rand ein kragenförmiger Wulst und eine Seitenfläche mit einem schulterförmigen Absatz zur Auflage der Kunststofffläche ausgebildet ist, sowie auf dem Absatz vor dem Auflegen der Kunststofffläche eine streifenförmige Dichtung eingebracht und die Kunststofffläche auf dem Absatz der Seitenfläche derart aufgelegt wird, dass eine Seitenfläche der Kunststofffläche mit der Seitenfläche der Metallfläche stoßförmig aneinandergereiht wird und mittels Umformung zwischen wenigstens einem Teil der Seitenfläche der Metallfläche und einem Teil der Seitenfläche der Kunststofffläche eine formschlüssige elastisch unterstützte Verbindung erzeugt wird, so dass an der Verbindungsstelle auf der Oberseite der Metallfläche und der Oberseite der Kunststofffläche ein im Wesentlichen fugenloser und im Wesentlichen stufenfreier Übergang zwischen der Metallfläche und Kunststofffläche ausgebildet wird.

Gemäß dem Gegenstand der Erfindung nach Anspruch 8 wird ein Metall - Kunststoff Verbund bereitgestellt, aufweisend eine Metallfläche mit einer Oberfläche und einer Seitenfläche, wobei die Seitenfläche einen schulterförmigen Absatz und senkrecht zu der Oberfläche ein rücklaufendes Profil ausbildet. Hierbei weist der Verbund eine auf dem Absatz aufliegende streifenförmige Dichtung, sowie eine Kunststofffläche mit einer Seitenfläche, die teilweise stoßförmig an die Seitenfläche der Metallfläche anliegt und deren Unterseite wenigstens teilweise auf der Dichtung aufliegt, auf. Des weiteren stellt der Verbund eine Verbindungsstelle bereit, die auf Oberseite der Metallfläche und der Kunststofffläche einen im Wesentlichen fugenlosen und im Wesentlichen stufenfreien Übergang zwischen der Metallfläche und Kunststofffläche ausbildet.

Ein Vorteil des erfindungsgemäßen Verfahrens ist es, dass zwei unterschiedliche Materialien ohne zusätzliche mechanische oder chemische Befestigungsmittel aneinandergefügt werden können. Ferner wird eine Ausbildung von Fugen und Stufen zumindest an deren Oberflächen unterdrückt. Hierdurch ist es möglich einen klebstofffreien Verbund auszubilden, der weitestgehend undurchlässig für atmosphärische Gase und oder Flüssigkeiten ist. Insbesondere bei einer Anwendung im Lebensmittelbereich unterdrückt die weitgehende Fugenfreiheit der Oberfläche und die Klebstofffreiheit eine unerwünschte Einlagerung von Stoffen oder Abgabe von Klebstoffmittel, die die hygienischen oder aseptischen Eigenschaften des Verbundes verschlechtern würden. Ferner wird aufgrund des Umformprozesses in Verbindung mit einer angepassten Profilführung der beiden Seitenflächen ein stufenloser Übergang zwischen der Oberseite der Metallfläche und der Oberseite der Kunststofffläche ohne die bisher notwendigen zusätzlichen Nachbearbeitungsschritte wie beispielsweise Polieren oder Fräsen erzielt.

In einer bevorzugten Weiterbildung des Verfahrens wird mittels der Umformung an der Seitenfläche der Metallfläche ein rücklaufendes Profil ausgebildet, um die Kunststofffläche gegen eine senkrechte Verschiebung gegenüber der Metallfläche zu sichern. Des Weiteren ist es vorteilhaft, dass die Dichtung zwischen der Metallfläche und der Kunststofffläche aus einem elastischen Materialen wie beispielsweise Viton, Gummi oder Verbundkunststoffen besteht, um einen elastischen Formschluss zu erzeugen, der im Wesentlichen senkrecht zu der Metalloberfläche wirkt. Hierbei ist es vorteilhaft, wenn der äußere Rand der Kunststofffläche geeignet angefast wird, um eine Ausbildung der hinterschnittenen Seitenfläche der Metallfläche zu begünstigen. Gemäß einer anderen Weiterbildung ist es vorteilhaft, auch die Seitenfläche der Kunststofffläche mit einem stufenförmigen Absatz zu versehen. Hierbei wird das Profil des Absatz geeignet gewählt, so dass bei der Umformung nur die Unterseite des Absatzes der Kunststofffläche auf der Dichtung aufliegt und die Unterseite, vorzugsweise wenigstens ein Teil der Kunststofffläche zwischen den innenliegenden Rändern der Öffnung der Metallfläche bei dem Umformprozess durchfedern kann.

In einer anderen Weiterbildung wird die Kunststofffläche an ihrem äußeren Rand vollständig von der Metallfläche umschlossenen. Durch diese Ausbildung lässt sich insbesondere unter Verwendung von optisch durchlässigen Kunststoffen eine Möglichkeit zur Kontrolle von Fertigungsprozessen schaffen, ohne die Sensoren infolge direkten Kontakts mit chemisch oder mechanisch aggressiven Materialien zu beschädigen. Weiterhin ist es auch möglich, durch Wahl geeigneter Kunststoffe elektrische oder magnetische Felder durch die Kunststofffläche hindurchzusenden oder zu empfangen. Derartige Felder werden von Metallen im Allgemeinen abgeschirmt.

Untersuchungen der Anmelderin haben gezeigt, dass bei dem erfindungsgemäßen Verbund aus Metall - Kunststoff die Dichtung bevorzugt als elastischer umlaufender Streifen ausgebildet wird. Weiterhin können die elastischen Eigenschaften und die geometrische Ausführung der Dichtung je nach Anforderung und in Abhängigkeit der bei der Umformung wirkenden Kräften geeignet gewählt werden.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine schematische Schnittzeichnung durch die Metallfläche mit aufliegender Kunststofffläche im unverbundenen Zu- stand,
- Figur 2: eine schematische Schnittzeichnung im verbundenen Zu- stand, gemäß einer ersten Ausführungsform,
- Figur 3: eine schematische Schnittzeichnung im verbundenen Zu- stand, gemäß einer weiteren Ausführungsform,
- Figur 4: eine Draufsicht auf eine Metallfläche mit eingebetteter Kunststofffläche im verbundenen Zustand.

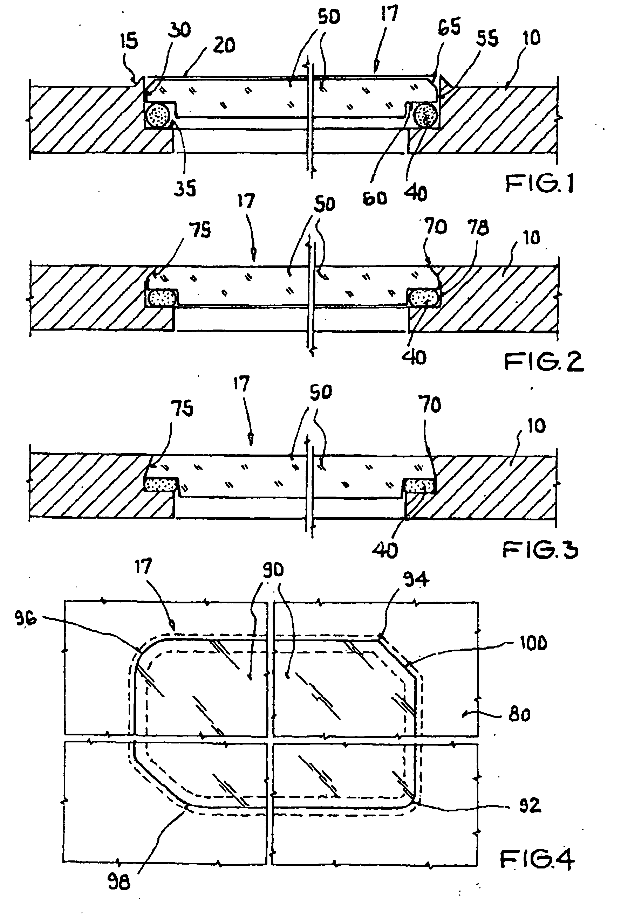

Die Schnittzeichnung dargestellt in der Figur 1 einer unverbundenen Anordnung zeigt eine Metallfläche 10 mit einem an einem Rand 20 der Metallfläche 10 ausgebildeten Wulst 15. Des Weiteren weist die Metallfläche 10 eine Seitenfläche 30 mit einem stufenförmigen Absatz 35 auf. Auf dem Absatz 35 liegt eine Dichtung 40 auf. Ferner weist die Metallfläche 10 eine Öffnung 17 mit einer innenliegenden Kunststofffläche 50 auf. Die Kunststofffläche 50 weist eine Seitenfläche 55 mit einem stufenförmigen Absatz 60 auf. Ferner ist an dem oberen Rand der Kunststofffläche 50 eine Fase 65 ausgebildet. Gemäß der dargestellten Ausführungsform ist die Erstreckung des Absatzes 60 parallel zu der Oberfläche der Kunststofffläche 50 etwas größer als die Erstreckung des Absatzes 35 gewählt. Ferner korrespondiert die Erstreckung des Absatzes 35 in einer Richtung senkrecht zu der Oberfläche zu einer Summe aus der Dicke der Kunststofffläche 50 und aus der Dicke der Dichtung 40. Gemäß der dargestellten Ausführungsform sind die Seitenflächen 30, 55 der Kunststofffläche 50 und der Metallfläche 10 stoßförmig angeordnet.

In der Figur 2 ist eine erfindungsgemäße Ausführungsform der Metallfläche 10 und der Kunststofffläche 50 in einem verbundenen Zustand, d.h. nach Anwendung des Umformverfahrens dargestellt. Hierbei ist die Seitenfläche 30 der Metallfläche mit der Seitenfläche 55 der Kunststofffläche 50 weitgehend formschlüssig verbunden. Auf der Oberfläche der Metallfläche 10 ist der Wulst 15, dargestellt in der-Figur 1, nicht mehr vorhanden, da das entsprechende Metall der Metallfläche 10 unter Ausbildung eines rücklaufenden Abschnitts 75 der Seitenfläche 30 einen Formschluss mit der Fase 65 der Kunststofffläche 50 ausbildet. Weiterhin bildet die Oberfläche der Kunststofffläche 50 mit der Oberfläche der Metallfläche 10 an der Verbindungsstelle 70 einen stufenlosen und fugenlosen Übergang aus. Durch die Umformung ist die Dichtung 40 elastisch verformt und presst nunmehr die Kunststofffläche 50 in einer Richtung senkrecht zu der Oberfläche an den rücklaufenden Abschnitts 75 der Seitenfläche 30 der Metallfläche 10. Des Weiteren wird mittels der Dichtung 40 die Sei- 30 tenfläche 30 der Metallfläche 10 gegenüber der Seitenfläche 55 der Kunststoff- H 30 fläche 50 unter Ausbildung eines Spalt 78 abgedichtet. Je nach Größe und Elastizität der umlaufenden Dichtung 40 und in Abhängigkeit der geometrischen Abmessungen der zu verbindenden Materialeigenschaften der verwendeten Metall- und Kunststoffflächen sowie der Geometrie der stufenförmigen Absätze an den Seitenflächen lässt sich sowohl der Anpressdruck der Kunststofffläche gegenüber der Metallfläche als auch die Größe des Spaltes an der Seitenfläche einstellen. Untersuchungen der Anmelderin haben gezeigt, dass trotz eines vertikalen Spaltes zwischen der Dichtung und der Seitenfläche der Metallfläche eine zuverlässige Abdichtung im Bereich des Übergangs zwischen der Kunststofffläche und der Metallfläche gewährleistet ist.

Gemäß einer Ausführungsform dargestellt in der Figur 3, wird im Bereich der Seitenflächen der Metallfläche 10 und der Kunststofffläche 50 ein vollständiger Formschluss zwischen den beiden Flächen erzielt. Demgemäß wird der Raum von der zwischen dem Absatz 35 und dem Absatz 60 angeordneten Dichtung vollständig ausgefüllt.

Die Figur 4 zeigt eine Draufsicht auf einen mittels des erfindungsgemäßen Verfahrens hergestellten Metall Kunststoff Verbundes, aufweisend eine Metallfläche 80 und eine Kunststofffläche 90 mit verschiedenen Kantenformen 92, 94, 96 und 98, welche unterschiedliche Krümmungsraden aufweisen. An einer Verbindungsstelle 100 bildet die Metallfläche 80 mit der Kunststofffläche 90 einen fugenfreien und stufenfreien Übergang aus. Trotz des kleinen Krümmungsradius bei der Kantenform 92 ist es durch die entsprechende Duktilität des verwendeten Metalls sichergestellt, dass mittels der Umformung auch in den Kantenbereichen auf der Oberfläche einen weitgehend fugenfreier und stufenfreier Übergang ausgebildet wird, ohne dass eine mechanische Nachbehandlung der Oberfläche erforderlich ist. Des Weiteren wird eine zuverlässige, mechanisch belastbare dichte Verbindung ohne die Verwendung von mechanischen oder chemischen Befestigungsmittel bereitgestellt,- die besonders für Anwendungen im Bereich der Lebensmitteltechnik geeignet ist.

## Patentansprüche

1. Verfahren zur Herstellung einer Verbindung zwischen einer Metallfläche (10) und einer Kunststofffläche (50),
**dadurch gekennzeichnet, dass**
an der Metallfläche (10) an wenigstens einem Rand (20) ein kragenförmiger Wulst (15) und eine Seitenfläche (30) mit einem schulterförmigen Absatz (35) zur Auflage der Kunststofffläche (50) ausgebildet ist,
auf dem Absatz (35) vor dem Auflegen der Kunststofffläche (50) eine streifenförmige Dichtung (40) eingebracht wird,
die Kunststofffläche (50) auf den Absatz (35) der Seitenfläche (30) derart aufgelegt wird, dass eine Seitenfläche (55) der Kunststofffläche (50) mit der Seitenfläche (30) der Metallfläche (10) stoßförmig aneinandergereiht wird,
mittels Umformung zwischen wenigstens einem Teil der Seitenfläche (30) der Metallfläche (10) und einem Teil der Seitenfläche (55) der Kunststofffläche (50) an der Seitenfläche der Metallfläche (10) ein rücklaufendes Profil ausgebildet und eine formschlüssige elastisch unterstützte Verbindung erzeugt wird, so dass an der Verbindungsstelle (100) auf der Oberseite der Metallfläche (10) und der Kunststofffläche (50) ein im Wesentlichen fugenloser und im Wesentlichen stufenfreier Übergang zwischen der Metallfläche (10) und Kunststofffläche (50) ausgebildet wird.

2. Verfahren nach Anspruch 1, **dadurch gekennzeichnet, dass** mittels der Umformung oberhalb des Absatzes (35) an der Seitenfläche der Metallfläche (10) ein rücklaufendes Profil ausgebildet wird.

3. Verfahren nach Anspruch 1 oder Anspruch 2, **dadurch gekennzeichnet, dass** die Kunststofffläche (50) an ihrem äußeren Rand vollständig von der Metallfläche (10) umschlossenen wird.

4. Verfahren nach einem der Ansprüche 1 bis 3, **dadurch gekennzeichnet, dass** an der Seitenfläche (55) der Kunststofffläche (50) ein stufenförmiger Absatz (60) ausgebildet wird.

5. Verfahren nach einem der Ansprüche 1 bis 4, **dadurch gekennzeichnet, dass** durch die Dichtung (40) zwischen der Metallfläche (10) und der Kunststofffläche (50) ein elastischer Formschluss erzeugt wird, der die Kunststofffläche (50) im Wesentlichen senkrecht zu der Oberfläche der Metalloberfläche (10) drückt.

6. Verfahren nach einem der Ansprüche 1 bis 4, **dadurch gekennzeichnet, dass** zwischen der Metallfläche (10) und der Kunststofffläche (50) ein klebstofffreier Verbund ausgebildet wird, der undurchlässig für Flüssigkeiten ist.

7. Verfahren nach einem der Ansprüche 1 bis 4, **dadurch gekennzeichnet, dass** zwischen der Metallfläche (10) und der Kunststofffläche (50) ein klebstofffreier Verbund ausgebildet wird, der undurchlässig für atmosphärische Gase ist.

8. Metall - Kunststoff Verbindung, aufweisend
eine Metallfläche (10) mit einer Oberfläche und einer Seitenfläche (30) mit einem schulterförmigen Absatz (35),
eine Verbindungsstelle (100), welche auf Oberseite der Metallfläche (10) und einer Kunststofffläche (50) einen im Wesentlichen fugenlosen und im Wesentlichen stufenfreien Übergang zwischen der Metallfläche (10) und der Kunststofffläche (50) aufweist, und
eine Seitenfläche (55) der Kunststofffläche (50), die teilweise stoßförmig an der Seitenfläche (30) der Metallfläche (10) anliegt, wobei die Unterseite der Kunststofffläche (50) teilweise auf einer auf dem Absatz (35) aufliegenden streifenförmigen Dichtung (40) aufliegt und eine formschlüssig elastisch unterstützte Verbindung ausbildet,
**dadurch gekennzeichnet, dass**
die seitenfläche der Metallfläche (30) oberhalb des schulterförmigen Absatzes (35) und senkrecht zu der Oberfläche der Metallfläche (10) ein rücklaufendes Profil aufweist, und das rücklaufende Profil einen Formschluss mit einer Fase (65) der Kunststofffläche (50) ausbildet und die Dichtung (40) die Kunststofffläche (50) in einer Richtung senkrecht zu der Oberfläche auf den rücklaufenden Abschnitt der Seitenfläche (35) presst.

9. Metall - Kunststoff Verbindung nach Anspruch 8, **dadurch gekennzeichnet, dass** die Metallfläche (10) eine Öffnung (17) mit einer darin angeordneten Kunststofffläche (50) aufweist.

10. Metall - Kunststoff Verbindung nach Anspruch 8 oder Anspruch 9, **dadurch gekennzeichnet, dass** die Dichtung (40) als elastischer umlaufender Streifen ausgebildet ist.

11. Metall - Kunststoff Verbindung nach einem der Ansprüche 8 bis 10, **dadurch gekennzeichnet, dass** die Verbindungsstelle (100) einen klebstofffreien Übergang zwischen der Seitenfläche der Metallfläche (10) und der Seitenfläche der Kunststofffläche (50) ausbildet.

## Claims

1. Method of producing a connection between a metal face (10) and a plastics material face (50), **characterised in that** a collar-shaped bead (15) and a side surface (30) with a shoulder-shaped step (35) for support of the plastics material face (50) are formed at the metal face (10) at at least one edge (20), a strip-shaped seal (40) is placed on the step (35) before laying the plastics material face (50) thereon, the plastics material face (50) is laid on the step (35) of the side surface (30) in such a manner that a side surface (55) of the plastics material face (50) is lined up face-to-face with the side surface (30) of the metal face (10), by means of deformation between at least a part of the side surface (30) of the metal face (10) and a part of the side surface (55) of the plastics material face (50) a return profile is formed at the side surface of the metal face (10) and a mechanically positive, resiliently supported connection is produced so that a substantially gapfree and substantially step-free transition between the metal face (10) and the plastics material face (50) is formed at the connecting point (100) on the surface of the metal face (10) and the plastics material face (50).

2. Method according to claim 1, **characterised in that** a return profile is formed at the side surface of the metal face (10) above the step (35) by means of the deformation.

3. Method according to claim 1 or claim 2, **characterised in that** the plastics material face (50) is completely enclosed at its outer edge by the metal face (10).

4. Method according to any one of claims 1 to 3, **characterised in that** a step-shaped offset (60) is formed at the side surface (55) of the plastics material face (50).

5. Method according to any one of claims 1 to 4, **characterised in that** a resilient mechanically positive coupling, which presses the plastics material face (50) substantially perpendicularly with respect to the surface of the metal face (10), is produced between the metal face (10) and the plastics material face (50) by the seal (40).

6. Method according to any one of claims 1 to 4, **characterised in that** an adhesive-free bond, which is impermeable to liquids, is formed between the metal face (10) and the plastics material face (50).

7. Method according to any one of claims 1 to 3, **characterised in that** an adhesive-free bond, which is impermeable to atmospheric gases, is formed between the metal face (10) and the plastics material face (50).

8. Metal / plastics material composite comprising a metal face (10) with a surface and a side surface (30) with a shoulder-shaped step (35), a connecting point (100) which has on the upper side of the metal face (10) and a plastics material face (50) a substantially gap-free and substantially step-free transition between the metal face (10) and the plastics material face (50), and a side surface (55) of the plastics material face (50) which bears partly face-to-face against the side surface (30) of the metal face (10), wherein the underside of the plastics material face (50) rests partly on a strip-shaped seal resting on the step (35) and forms a mechanically positive, resiliently supported connection, **characterised in that** the side surface of the metal face has a return profile above the shoulder-shaped step (35) and perpendicularly to the surface of the metal face (10) and the return profile forms a mechanically positive coupling with a chamfer (65) of the plastics material face (50) and the seal (40) presses the plastics material face (50) in a direction perpendicular to the surface and to the return section of the side surface (35).

9. Metal / plastics material composite according to claim 8, **characterised in that** the metal face (10) has an opening (17) with a plastics material face (50) arranged therein.

10. Metal / plastics material composite according to claim 8 or claim 9, **characterised in that** the seal (40) is formed as a resilient encircling strip.

11. Metal / plastics material composite according to any one of claims 8 to 10, **characterised in that** the connecting point (100) forms an adhesive-free transition between the side surface of the metal face (10) and the side surface of the plastics material face (50).

## Revendications

1. Procédé pour la réalisation d'une liaison entre une surface métallique (10) et une surface de matière synthétique (50)
**caractérisé en ce que** l'on forme sur la surface métallique (10) à au moins sur un bord (20) une nervure en collerette (15) et un chant (30) présentant un décrochement (35) en épaulement pour l'appui de la surface en matière synthétique (50)
**en ce que** l'on apporte sur le décrochement (35) avant la pose de la surface en matière synthétique (50) un joint en bande (40),
**en ce que** la surface de la matière synthétique (50) sur le décrochement (35) du chant (30) est recouverte de telle façon qu'un chant (55) de la surface en matière synthétique (50) se trouve aligné par une forme de poussée contre le flanc (30) de la surface métallique (10),
**en ce que** par formage entre au moins une partie du chant (30) de la surface métallique (10) et une partie du chant (55) de la surface en matière synthétique (50) sur le chant de la surface métallique (10) on conforme un profilé dorsal et on réalise une liaison élastique de soutien par ajustement de forme de façon que la zone de liaison (100) sur la face supérieure de la surface métallique (10) et la surface de la matière synthétique (50) présente entre ces deux surfaces une jonction essentiellement sans joint et sans variation de niveau.

2. Procédé selon la revendication 1 **caractérisé en ce qu'**au moyen du formage au-dessus du décrochement (35), il est formé sur le chant de la surface métallique (10) un profilé dorsal.

3. Procédé selon la revendication 1 ou 2 **caractérisé en ce que** la surface de matière synthétique (50) est entourée entièrement sur son bord extérieur par la surface métallique (10).

4. Procédé selon l'une des revendications de 1 à 3 **caractérisée en ce que** le chant (55) de la surface en matière synthétique (10) présente un décrochement (60) en gradin.

5. Procédé selon l'une quelconque des revendications de 1 à 4 **caractérisé en ce que** l'on réalise par le joint (40) entre la surface métallique (10) et la surface en matière synthétique (50) un ajustement de forme à caractère élastique qui presse sensiblement perpendiculairement la surface en matière synthétique (50) contre la face supérieure de la surface métallique (10).

6. Procédé selon l'une des revendications de 1 à 4 **caractérisé en ce qu'**entre la surface métallique (10) et la surface de la matière synthétique (50) est formée une liaison exempte de colle qui est étanche aux liquides.

7. Procédé selon l'une des revendications de 1 à 4 **caractérisé en ce qu'**entre la surface métallique (10) et la surface en matière synthétique (50) élastique est formée une liaison exempte de colle qui est étanche aux gaz atmosphériques.

8. Liaison métal-plastique présentant
une surface métallique (10) avec une face supérieure et un chant (30) comportant un décrochement en forme d'épaulement (35)
une zone de liaison (100) qui présente sur la face supérieure de la surface métallique (10) et sur une surface de matière synthétique (50) une jonction essentiellement sans joint et sans palier entre la surface métallique (10) et la surface de matière synthétique (50) et
un chant (55) de la surface de matière synthétique (50) qui porte en poussée partiellement contre le chant (30) de la surface métallique (10) s'étendant partiellement sur un joint (40) en bande reposant sur le décrochement (35) et formant une liaison élastique de soutien à ajustement de forme
**caractérisée en ce que**
le chant de la surface métallique (30) au-dessus du décrochement (35) en épaulement de la surface métallique (10) et perpendiculairement à la face supérieure de la surface métallique (10) présente un profil dorsal, et le profil dorsal est conformé en un ajustement de forme en biseau (65) avec la surface de matière synthétique (50) et **en ce que** le joint (40) de la surface en matière synthétique (50) presse dans une direction perpendiculaire à la face supérieure contre la partie dorsale du chant (35).

9. Liaison métal-plastique selon la revendication 8 **caractérisé en ce que** la surface métallique (10) présente une ouverture (17) dans laquelle se trouve agencée une surface de matière synthétique (50).

10. Liaison métal-plastique selon la revendication 8 ou 9 **caractérisé en ce que** le joint (40) est conformé en bande périphérique élastique.

11. Liaison métal-plastique selon l'une quelconque des revendications de 8 à 10 **caractérisé en ce que** la zone de liaison (100) présente une jonction sans colle entre le chant de la surface métallique (10) et le chant de la surface de matière synthétique (50).
